# EUROPEAN PATENT APPLICATION

(11) **EP 1 392 064 A1**
(43) Date of publication of application: **25.02.2004**
(21) Application number: 02018662.3
(22) Date of filing: 20.08.2002
(51) Int. Cl.: H04Q 3/00

(54) **E-mail waiting notification on request**

(71) Applicant: SIEMENS AKTIENGESELLSCHAFT, 80333 München (DE)
(72) Inventor: Jesenovec, Janez, 1356 Dobrova (SI)

(57) **Abstract**

The present invention relates to EWI (email waiting indication) queries of a mail server (MS) in a packet-switched network (IPNET) via a PSTN terminal device (TEL). The subscriber to the EWI service requests EWI information by entering a service access code (SAC(E.164)) at the PSTN terminal device. The subscriber's input provides a trigger for the generation of an EWI request (rq(aid, E.164, iauth, adEWIS)) in an in-ternode module (INM). The EWI request (rq(aid, E.164, iauth, adEWIS)) is dispatched to an application server (EWIS), adapted for transmission over the packet-switched network (IPNET) and processed by the application server (EWIS). Upon processing of the EWI request (rq(aid, E.164, iauth, adEWIS)) the application server (EWIS) directs an EWI query (qu(uid, PW, adMS, adEWIS)) to the mail server (MS). The present invention provides an EWI service that is largely independent of providers and network equipment, requires no add-ons at the endpoints, i.e. PSTN terminal device (TEL) and mail server (MS), and avoids multiple access interference.

## Description

The invention refers to a method and an internode module for querying a mail server located in a packet-switched network via a PSTN or mobile terminal device.

The present advances in networking and internet technologies have paved the way for new or improved telecommunication services. In particular, improved interworking between TDM (time division multiplexing) networks and packet-switched networks allows for novel services that combine different network technologies and different categories of terminal devices.

Notably, PSTN (public switched telephone networks) or mobile terminal devices have been put to use for retrieving information stored on packet-switched networks. One of the most conspicuous examples for such an application is accessing email status information and email content by telephone.

The corresponding service is often termed EWI (email waiting indication). Within EWI the PSTN subscriber receives a notification message about new email messages on his account. The requested pieces of information are transmitted to his PSTN terminal device and outputted by announcement, dial tones, or visual display. In the last case the PSTN terminal device needs to be equipped with a visual display functionality.

Two different technical realizations for EWI have been proposed. An EWI method with a software module co-located with the email server has been implemented by a number of service providers. The software module detects updates on the subscriber's email account and sends the email status information to the PSTN terminal device via POP (point of presence)to a neighborhood CO (central office), where the information is stored. The EWI user subscribes to the EWI service by submitting a request for notification via his PSTN terminal device by hook off which causes the email status information held at the CO to be passed on to the requestor.

This EWI method is based on a software module that is located at the email server and maintained by the same ISP (internet service provider) as the email service. Thus, the method is dependent on additional functionality provided by the email service provider. From the perspective of the PSTN carrier this dependency detracts from the attractiveness of the EWI service as the service can only be offered to PSTN subscribers with email accounts where the respective ISP set up the requisite software module.

The second method circumvents this dependency. This method is under the acronym MAMOS (mail monitor server polling). According to this method the mail server is polled by a monitoring module which can be located with the telephony provider. The monitoring module cyclically checks for new mail messages and retrieves status information on the mail account. This method does not rely on additional functionality at the mail server platform. This advantage comes at the cost of increased traffic due to the cyclical polling messages. In addition, multiple access interference is possible when the polling of an account coincides with the account holder's downloading of unread emails. As a consequence the downloading of emails may be blocked.

The present invention aims at improving on current EWI methods.

According to the present invention a query of an mail server located in a packet-switched network is launched via a PSTN (public switched telephone network) or mobile terminal device, such as a digital or analogue telephone or a fax machine. Service access information is inputted at the PSTN terminal device. As a consequence a stimulus or trigger for the EWI service is transmitted to an internode module. The internode module comprises software for building an EWI (email waiting indication) request. It may form part of a transit exchange or a central office. Alternatively, the internode module is located in a dedicated platform for providing functionality for an email query via telephone and possibly additional Internet supplementary services (ISS). Upon reception of a trigger, e.g. a portion of the service access information, an EWI request is generated in the internode module and dispatched to an application server located in the packet-switched network, e.g. IP (internet protocol) network. For transmission across the network boundary between the PSTN network and the packet-switched network the EWI request is adapted. This adaptation may be carried through in a RAS (remote access server) server. Upon reception of the EWI request a query of the mail server is performed by the application server. The results of the query are transmitted to the subscriber, e.g. as a PSTN call (announcement) or/and a SMS (Short Message Service) message.

According to the invention the EWI service requires
- to provide the internode module's functionality in the PSTN network,
- to provide an application server in the packet-switched network, and
- to provide for adaptation of messages exchanged between the internode module and the application server.
In particular, the invention does not assume or require service-specific means at the endpoints, i.e. the PSTN terminal device and the mail server. Standardised protocols for queries of mail servers by application servers do exist, e.g. POP3 (Post Office Protocol), IMAP (Internet Message Access protocol), and SMTP (Simple Mail-Transfer Protocol). Thus, no additional software needs to be implemented in the mail server. Moreover, it is sufficient to provide the requisite functionality for the EWI service at least at one or a few points in the networks. For example, an internode module can cater to a multitude of service subscribers with divers terminal devices and PSTN network connection. A stimulus for the EWI service may be routed from the subscriber's terminal device to the internode module via different types of switching nodes, e.g. private branch exchange, mobile exchange, central office, or transit exchange. Similarly, a multitude of mail servers may be accessed by the present application server. Thus, the present invention is to a large extent provider-independent or network-independent and provides an economical solution with respect to the deployment of equipment. The invention rules out multiple access interference situations as for MAMOS methods.

Below the invention is described by way of example and with reference to figures.

Fig. 1 shows a scenario for the present method with a standalone internode module.

Fig. 2 shows a scenario for the present method with an internode module integrated in a switching platform.

Fig. 3 shows a scenario for the present method with an internode module integrated in an open service platform.

Fig. 4 shows a diagram of messages exchanged in the course of the present method.

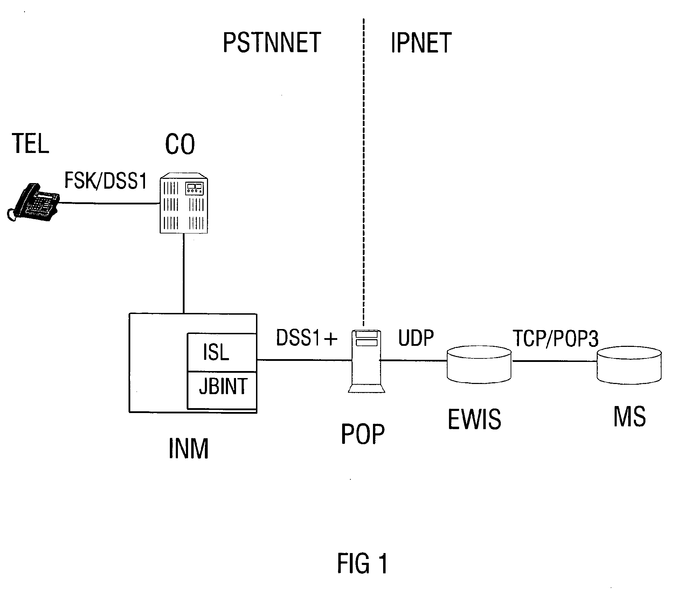

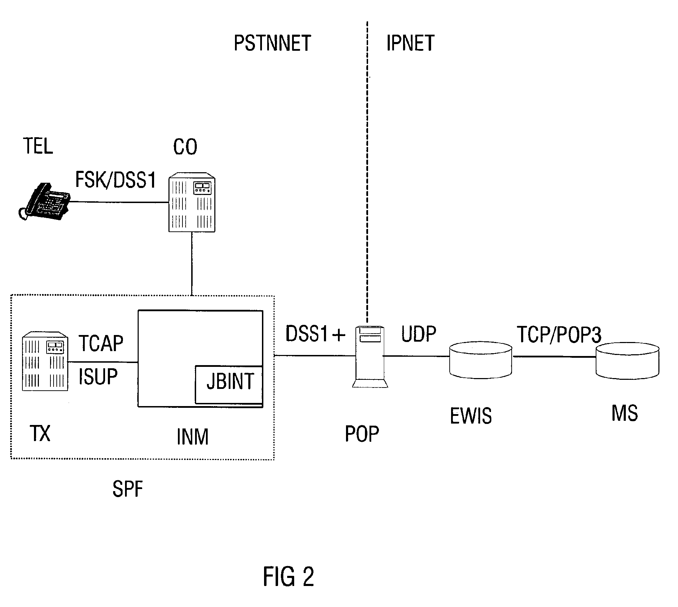

The present invention provides for the retrieving of email-related information via a telephone network terminal device TEL, which is located in a PSTN network PSTNNET or mobile network. As the email-related information is stored in a mail server MS, which is located in a packet-switched network IPNET, such as an IP (internet protocol) network, interworking between the PSTN network PSTNNET and the packet-switched network IPNET is required. Fig. 1 and fig. 2 show two variants of a system for the present method. According to the present invention a telephone network terminal device TEL is employed. This terminal device TEL connects via central office CO to a PSTN network PSTNNET. For the processing of the subscriber's request for information an internode module INM is located in the PSTN network PSTNNET. A physical unit POP (POP:point of presence) provides gateway functionality for traffic across network boundaries. A server EWIS (EWIS: email waiting information server) provides support for sending email information requests to a mail server MS (MS: mail server). Fig. 1 and fig. 2 show alternative realisations with respect to the internode module INM:
- Fig. 1 shows an internode module INM that is equipped with a software module ISL (ISL: integrated service logic) to interpret and to handle PSTN control commands and a module JBINT for building an EWI request. The module JBINT may also provide further internet supplementary services (ISS).
- Alternatively, the internode module is co-located with a transit exchange module TXM on a switching platform SPF. The transit exchange module TXM provides the functionality of a transit exchange. Essentially, the switching platform SPF may be realised as a transit exchange with the internode module INM as an add-on. Part of the functions for interpreting and handling control commands are provided by the transit exchange module TXM. For new generation networks different hierarchical level of service control functions are defined within the IN (intelligent network) concept. On a lower level service switching points (SSPs) with SSFs (service switching functions) are defined. On a higher level service control points (SCPs) with service control functions (SCFs) are provided. Both, SSFs and SCFs may be located at the switching platform SPF. For SSF-to-SSF type signalling between the transit exchange module TXM and the internode module INM the ISUP (ISDN user part) protocol is used. For SCF-to-SSF type signalling between the transit exchange module TXM and the internode module INM the TCAP (transaction capabilities transfer part) protocol is employed.

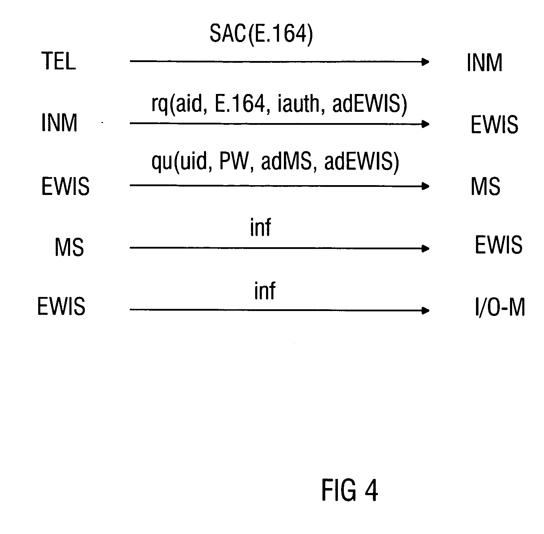

In addition, in fig. 1 and fig. 2 protocols for transport of messages are presented, which will be described below in conjunction with the exchange of messages as depicted in fig. 4.

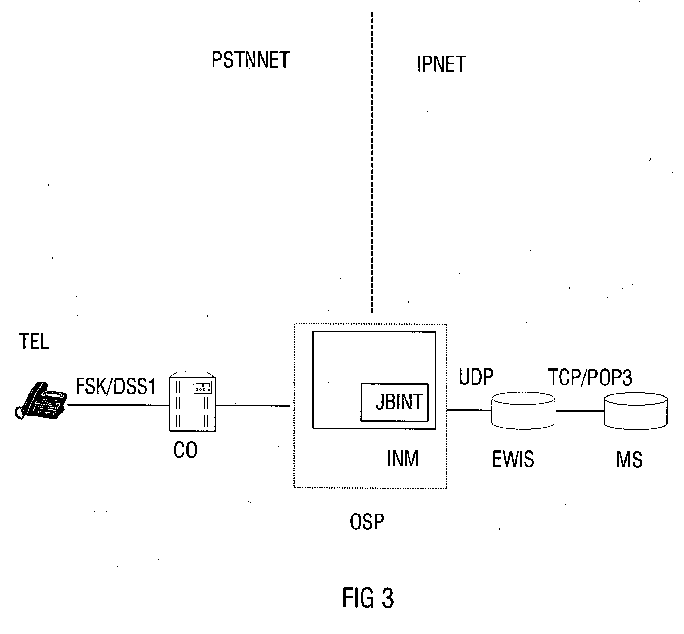

Recent developments envisage switching platforms that allow to directly link TDM and packet-switched networks. Such switching platforms are often envisaged to combine class-5 switching functionality for PSTN networks with routing functionality for packet-switched networks. In connection with this kind of switching platforms people often refer to open service platforms (OSP) or open services gateways. In many cases application programming interfaces (APIs) are provided on these platforms to allow for implementation of new services. In fig. 3 a scenario for the present method is shown where the internode module according to the invention is integrated in an open service platform OPS. In this case no point of presence POP is needed as the open service platform OPS itself provides the interface between the PSTN network PSTN and the packet-switched network IPNET.

The present method can be carried through according to the exchange of messages shown in fig. 4. A subscriber to the EWI service enters a SAC(E.164) (SAC: service access code) at the PSTN terminal device TEL, e.g. an analogue or digital telephone. The SAC input triggers the transmission of a signal comprising a piece of information for identification E.164, such as an ITU-T E.164 telephone number. The signal is routed via a central office CO to the internode module INM. It is not imperative for all switches to be equipped with the requisite functionality as a primary switching systems, e.g. central offices or private branch exchanges, may forward the signal to a transit exchange with an internode module INM or a standalone internode module INM.

Upon reception of the signal at the internode module's platform the subscriber is authenticated and an EWI request rq(aid, E.164, iauth, adEWIS) is generated by the software module JBINT. The EWI request comprises an application type parameter aid (aid: application identifier), an identifier E.164 for the terminal device TEL, authentication information iauth, and the address adEWIS of the EWI server EWIS. The EWI request rq(aid, E.164, iauth, adEWIS) is sent via DSS1 tunnelling to a RAS (remote access server), which represents a POP (point of presence) for the packet-switched network. In order to support a number of Internet supplementary services (ISS) people often employ an enhanced version DSS1+ of the DSS1 protocol to provide for transport of information that relates to the Internet, e.g. Internet address information. POP may support Internet supplementary services, such as EWI. For example, POP extracts the application type parameter aid and processes the message according to this parameter. Thus, the EWI request is adjusted for transmission over an IP network and routed via UDP (user datagramm protocol) to the EWI server EWIS. The subscriber's email account and the respective mail server's address adMS is identified by the EWI server. The EWI server relates the identifier E.164 for the terminal device TEL to authentication information or identification information required for querying the mail server MS, e.g. user identification information uid or/and a password PW for the service subscriber. This mapping of identification information for the PSTN terminal device TEL to identification/authentication information for an email account can be performed by means of a table that is administered via the Internet. The EWI server draws on functionality provided by high-level protocols for email exchange such as POP3 or IMAP to put a query to the mail server MS. A query qu(uid, PW, adMS, adEWIS) is launched to obtain the requested email-related information. This query comprises user identification information uid, a password for the respective user PW, the mail server's address adMS, and the EWI server's address adEWIS (to be used for the reply message). As an application protocol for the query standard protocols for email-message exchange, such as SMTP, IMAP or POP3, and TCP as transport protocol may be deployed. Upon authentication the requested information inf, e.g. number of unread emails, is retrieved by the email server EMS and returned to the EWI server IMWS. Subsequently, the information is transmitted to the internode module INM via POP. The information inf handled by the POP and passed on to a module I/O-M, where the information is adjusted for outputting to the subscriber. For example, a TTS (text-to-speech) software is used to turn the information inf into a voice message, which is transmitted to the subscriber. Alternatively, the information is adjusted to be transmitted as a SMS message to a mobile phone.

## Claims

1. A method for an EWI (email waiting indication) query of an mail server (MS) located in a packet-switched network (IPNET) via a PSTN terminal device (TEL), comprising:
a) inputting of service access information (SAC(E.164)) at the PSTN or mobile terminal device (TEL),
b) transmitting a trigger to an internode module (INM),
c) generating an EWI request (rq(aid, E.164, iauth, adEWIS)) at the internode module (INM),
d) adapting the EWI request (rq(aid, E.164, iauth, adEWIS)) for transmission over the packet-switched network (IPNET),
e) transmitting the EWI request (rq(aid, E.164, iauth, adEWIS)) to an application server (EWIS), and
f) submitting a query (qu(uid, PW, adMS, adEWIS)) to the mail server (MS) via the application server (EWIS).

2. The method according to claim 1, **characterised in that** the EWI request (rq(aid, E.164, iauth, adEWIS)) is adapted for transmission over the packet-switched network (IPNET) in a RAS (remote access server) server (POP).

3. The method according to claim 1 or 2, **characterised in that** the service access information (SAC(E.164)) is transmitted to the internode module (INM) via a central office (CO), a mobile exchange, a private branch exchange (PBX), or a transit exchange (TX).

4. The method according to one of the claims 1 to 3, **characterised in that** the internode module (INM) forms part of a transit exchange or an open service platform (OSP).

5. The method according to one of the claims 1 to 3, **characterised in that** the internode module (INM) is located in a standalone platform.

6. The method according to one of the claims 1 to 5, **characterised in that** the DSS1 protocol or analogue subscriber line is employed for transmission of the service access information (SAC(E.164)) to the internode module (INM).

7. The method according to one of the claims 2 to 6, **characterised in that** the DSS1 protocol is employed for transmission of the EWI request (rq(aid, E.164, iauth, adEWIS)) to the RAS server (POP).

8. The method according to one of the preceding claims, **characterised in that** the POP3 protocol, the IMAP protocol or the SMTP protocol is employed for the query of the mail server (MS).

9. The method according to one of the preceding claims, **characterised in that** information (inf) retrieved through the IMW query is sent to a service subscriber via voice message.

10. The method according to one of the claims 1 to 8, **characterised in that** information (inf) retrieved through the IMW query is sent to a service subscriber via SMS message.

11. Internode module (INM) to carry through a method according to one of the claims 1 to 10, comprising means for generating an EWI request (rq(aid, E.164, iauth, adEWIS)).
